# FASCICULE DE BREVET EUROPEEN

(11) **EP 1 045 007 B1**
(45) Date de publication et mention de la délivrance du brevet: **21.07.2004**
(21) Numéro de dépôt: 00400857.9
(22) Date de dépôt: 29.03.2000
(51) Int. Cl.: C08L 101/00, C08L 77/02, C08L 77/00

(54) **Compositions de résines thermoplastiques comprenant une phase dispersée rigide**
Thermoplastische Harzzusammensetzungen mit einer dispergierten starren Phase
Thermoplastic resin compositions comprising a rigid dispersed phase

(30) Priorité: 15.04.1999 FR 9904722
(43) Date de publication de la demande: 18.10.2000
(73) Titulaire: Elf Atochem S.A., 92800 Puteaux (FR)
(72) Inventeur: Bertin, Denis, 76970 Motteville (FR); Bouilloux, Alain, 27300 Bernay (FR); Teze, Laurent, 78700 Conflans Sainte Honorine (FR); Vivier, Thierry, 27470 Serquigny (FR)
(74) Mandataire: Neel, Henry

(56) Documents cités:
- WO-A-97/46619
- FR-A- 2 108 373
- FR-A- 2 586 024
- GB-A- 2 057 466

## Description

La présente invention concerne des compositions de résines thermoplastiques comprenant une phase dispersée rigide. Les thermoplastiques tels que par exemple les polyamides ou le PMMA doivent selon leurs usages présenter une tenue thermique améliorée.

L'art antérieur a proposé diverses solutions pour augmenter les propriétés thermomécaniques de matrices thermoplastiques.

Une des solutions est d'introduire dans une matrice thermoplastique un autre polymère (amorphe ou cristallin) de plus haute tenue thermique (température de transition vitreuse plus élevée que celle du thermoplastique) que la matrice elle-même. Les principaux matériaux basés sur ces systèmes ont été principalement développés avec notamment des alliages (i) de polyphénylènes éthers (PPO), de polyphénylènes sulfure (PPS), de polyétherimides (PEI) ou de polycétones avec (ii) des polymères thermoplastiques tels que des polyamides, des polystyrènes, des copolymères ABS ou SAN. Les brevets US 4 681 915, US 4 600 741 et EP 244 090 ont décrit des polyamides contenant du PPO. L'inconvénient de cette technique est qu'il est nécessaire de mélanger les deux polymères à l'état fondu dans des conditions précises et dans des machines telles que des extrudeuses ou des mélangeurs en choisissant correctement le profil de vis et les températures des différentes zones et de plus le polymère qu'on ajoute dans la matrice thermoplastique pour la renforcer a souvent une température de fusion élevée.

La demande de brevet JP 04-149273 A publiée le 22 mai 1992 décrit des alliages de polyamide ou de polypropylène avec une résine thermodurcissable capable de réticuler à la température de fusion du polyamide ou du polypropylène. Cette résine thermodurcissable est un époxy. On constate une augmentation de la HDT par comparaison avec le polyamide ou le polypropylène ne contenant pas cette résine époxy. On désigne par HDT (heat deflection température) la température de déformation sous charge (les valeurs de charge et déformation étant définies par convention), elle se mesure selon la norme NF T 51-005. Cette réticulation se produit par des réactions de polycondensation ce qui provoque lors de l'extrusion la formation de nodules ayant une très large plage de dimensions ce qui dégrade les autres propriétés mécaniques de l'alliage polyamide -époxy ou polypropylène -époxy telles que la résistance au choc. De plus la réaction de polycondensation peut durer plus de 10 minutes ce qui est incompatible avec un procédé en continu par exemple dans une extrudeuse.

L'invention consiste à introduire dans une matrice thermoplastique (polystyrène, poly(méth)acryliques, polyamides, polyoléfines, élastomères, polymères fluorés) des nodules durs de morphologie (billes) et de taille (de l'ordre ou inférieur au micron) contrôlées à un taux suffisant pour permettre d'augmenter les tenues thermiques de ces polymères thermoplastiques tout en conservant voire améliorant les propriétés mécaniques (rigidité, choc) initiales de la matrice de base. Les nodules durs de morphologie et de taille contrôlée sont obtenus par polymérisation radicalaire de monomères (di, tri, multi) insaturés (polymérisant par cette voie). Les compositions de l'invention sont thermoplastiques.

Les compositions de l'invention ont aussi l'avantage de pouvoir être fabriquées de manière très simple Ce procédé consistant à former des nodules réticulés (ou rigides) in situ au sein d'une matrice thermoplastique présente plusieurs avantages. Le premier est que le mélange initial (matrice thermoplastique + précurseur des nodules rigides) est homogène : ce qui revient à dire que le précurseur est miscible avec la matrice thermoplastique dans un domaine de température donné. Ceci améliore également la processabilité puisque durant cette première étape il y a en fait une plastification de la matrice se traduisant par des conditions d'extrusion plus douces. Le deuxième est lié au fait que les précurseurs de réticulation sont généralement miscibles à la matrice thermoplastique même à teneur élevée, de hauts taux de phase dispersée (nodules rigides) peuvent in fine être obtenus. Les autres avantages concernent la morphologie des nodules rigides puisque la stabilité est garantie en raison du caractère réticulé de la phase dispersée ainsi que la finesse et l'isotropie de la dispersion dues à la formation in-situ de la phase dispersée.

Un autre avantage de la présente invention concerne la résistance au choc. De nombreux thermoplastiques doivent être modifiés par incorporation d'élastomères ou de polymères de plus basse Tg (température de transition vitreuse). Par exemple le polyamide 6, le polyamide 12 peuvent contenir de 5 à 20 % en poids d'EPR (éthylène- polypropylène rubber ou EPM) ou de copolymère éthylène-acrylate d'alkyle-anhydride maléique. Mais cette introduction tout en améliorant la résistance au choc provoque une baisse du point VICAT et/ou de la HDT. On entend par point VICAT la température à laquelle une tige cylindrique de 1 mm² de section s'enfonce de 1 mm dans l'échantillon. Elle se mesure selon la norme NF T 51-021. La demanderesse a découvert que la présence de nodules rigides dans une matrice thermoplastique était compatible avec la présence d'autres polymères tels que les modifiants choc dans cette matrice thermoplastique. De plus ce thermoplastique contenant les nodules rigides et le modifiant choc avait un point VICAT et/ou une HDT au moins égale à celle du thermoplastique ne contenant ni nodules rigides ni modifiant choc et que la résistance au choc etait meilleure que celle du thermoplastique contenant seulement le modifiant choc.

La présente invention est donc une composition thermoplastique comprenant :
- un polymère thermoplastique (M) formant matrice,
- des nodules rigides obtenus par polymérisation radicalaire de monomères di ou triinsaturés et tels que 50% en nombre de ces nodules ont une taille inférieure à 1 µm et que leur forme est sphérique,
- éventuellement un modifiant choc (S).

L'invention va maintenant être décrite en détails.

A titre d'exemple de polymères (M) on peut citer les polyoléfines, les polyamides, les polymères fluorés, les polyesters saturés, le polycarbonate, les résines styréniques, le PMMA, les polyuréthanes thermoplastiques (TPU), les copolymères à blocs polyamides, les copolymères à blocs polyester et blocs polyéther, le PVC, les copolymères de l'éthylène et de l'alcool vinylique (EVOH) et les polycétones.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de certains de ces monomères ce qui conduit à des copolyamides, par exemple le PA-6/12 par condensation du caprolactame et du lauryllactame.

Les polymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques,de lactames ou de diacides carboxyliques et diamines en présence d'un diacide carboxylique limiteur de chaîne. Avantageusement, les blocs polyamides sont en polyamide-12.

La masse molaire en nombre des séquences polyamides est comprise entre 300 et 15 000 et de préférence entre 600 et 5 000. La masse des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25°C.

Que les blocs polyéthers dérivent du polyéthylène glycol du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol, du propylène glycol ou encore du tétraméthylène glycol.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50% en poids ou plus du polymère à blocs polyamide et blocs polyéther. Avantageusement, la quantité de polyamide et la quantité de polyéther sont dans le rapport (polyamide / polyéther) 50/50 à 80/20.

De préférence, les blocs polyamides et les blocs polyéther d'un même polymère (B) ont respectivement des masses Mn 1000/1000, 1300/650, 2000/1000, 2600/650 et 4 000 /1 000.

On entend par polyoléfine un polymère comprenant des motifs oléfines tels que par exemple des motifs éthylène, propylène, butène-1, ou tout autre alpha oléfine. A titre d'exemple, on peut citer :
- les polyéthylènes tels que les LDPE, HDPE, LLDPE ou VLDPE, le polypropylène, les copolymères éthylène / propylène, ou encore les PE métallocènes, les copolymères éthylène/monomères C3 à C10 ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, le Melt Flow Index (MFI) peut être comprise entre 0,3 et 40.

A titre d'exemples de polymères fluorés, on peut citer le polyfluorure de vinylidène (PVDF), les copolymères comprenant du fluorure de vinylidène (VF2), les copolymères de l'éthylène et du tétrafluoroéthylène, le poly (trifluoroéthylène), les copolymères du trifluoroéthylène, les homo et copolymères de l'hexafluoropropène, les homo et copolymères du chlorotrifluoroéthylène. On utilise avantageusement le PVDF.

On entend par EVOH les copolymères de l'éthylène et de l'alcool vinylique. Ils proviennent de l'hydrolyse des copolymères éthylène / acétate de vinyle, cette hydrolyse pouvant être incomplète, il peut rester des motifs acétate de vinyle.

A titre d'exemple de polyester, on peut citer le PET (polyéthylène téréphtalate), le PBT (polybutylène téréphtalate) ou le PEN (polyéthylène naphténate).

Les copolymères à blocs polyesters et blocs polyéther sont des copolymères ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester.

De tels copolyétheresters sont décrits dans les brevets EP 402 883 et EP 405 227.

A titre de polyuréthanes thermoplastiques, on peut citer les polyétheruréthannes, par exemple, ceux comprenant des motifs diisocyanates, des motifs dérivés de polyéther diols et des motifs dérivés de l'éthane diol ou du butane diol-1,4.

On peut encore citer les polyesteruréthannes par exemple ceux comprenant des motifs diisocyanates, des motifs dérivés de polyesters diols amorphes et des motifs dérivés de l'éthane diol ou du butane diol-1,4.

Les polycétones sont des polymères comprenant substantiellement une mole d'oxyde de carbone pour chaque mole de monomère insaturé. Ce monomère peut être choisi parmi les alpha oléfines ayant de 2 à 12 atomes de carbone ou leurs dérivés de substitution. Il peut aussi être choisi parmi le styrène ou ses dérivés obtenus par substitution avec des alkyls tels que les méthylstyrènes, éthylstyrène et isopropylstyrène.

De préférence, les polycétones sont des copolymères de l'éthylène et de l'oxyde de carbone ou des copolymères de l'éthylène, du polypropylène et de l'oxyde de carbone.

Quand les polycétones sont des copolymères de l'éthylène, d'un deuxième monomère et de l'oxyde de carbone, il y a au moins deux motifs éthylène pour un motif du deuxième monomère et de préférence 10 à 100.

Les polycétones peuvent être représentées par la formule :

-(-CO-CH₂-CH₂-)ₓ-(-CO-A-)_{y}-

dans laquelle A désigne un monomère insaturé ayant au moins 3 atomes de carbone, le rapport x/y étant au moins 2.

Les motifs -(-CO-CH₂₋CH₂-) et -(-CO-A-)- sont répartis au hasard dans la chaîne de polycétone.

Les masses molaires en nombre peuvent être comprises entre 1 000 et 200 000, avantageusement entre 20 000 et 90 000 (mesurées par chromatographie à perméation de gel). Les températures de fusion peuvent être comprises entre 175 et 300° C, le plus souvent entre 200 et 270° C.

Des synthèses de ces polycétones sont décrites dans les brevets US 4 843 144, et US 4 880 903 et US 3 694 412.

On ne sortirait pas du cadre de la présente invention en utilisant pour (M) un mélange de plusieurs thermoplastiques.

Les nodules durs de morphologie et de taille contrôlées sont obtenus par polymérisation radicalaire de monomères (di, tri) insaturés (polymérisant par cette voie). Ainsi, lors de la polymérisation, à cause de la multifonctionnalité du monomère, il y a formation d'un réseau réticulé ayant les propriétés d'un matériau rigide (insoluble, haute Tg ). On peut citer à titre d'exemple de précurseurs les monomères suivants :
- le triméthylolpropane triacrylate (TMPTA), le triméthylolpropane triméthacrylate(TMPTMA), les triméthylolpropane ethoxylate (di, tri) acrylate, le triméthylolpropane diallyl éther, le di(triméthylolpropane)tetraacrylate, le pentaérythritol tétraacrylate, le pentaérythritol triacrylate, le triméthylolpropane triacrylate éthoxylé, le pentaérythritol tétraacrylate éthoxylé,
- le triallylcyanurate, le triallylisocyanurate, le triallylamine, le triallyl 1,3,5 benzenetricarboxylate, le tris[2-(acryloyloxy)éthyl] isocyanurate,
- le divinylbenzène, le trivinylcyclohéxane, le divinylsulfone,
- le 1,3-divinyltétraméthyldisoloxane
- les monomères diallyliques : diallylcarbonate, diallylméthylsilane, diallyléther, diallylmaléate, diallylphtalate, diallylpyrocarbonate, diallylsuccinate, diallylphénylphosphine.

Avantageusement on ajoute un amorceur de polymérisation radicalaire, les peroxydes conviennent parfaitement. A titre d'exemple de peroxyde on peut citer le t-butyl-hydroperoxyde, le cumène-hydroperoxyde, le di-iso-propyl-benzène-hydroperoxyde, le di-t-butyl-peroxyde, le t-butyl-cumyl-peroxyde, le dicumyl-peroxyde,le 1,3-bis-(t-butylperoxy-isopropyl)benzène, l'acétyl-peroxyde, le benzoyl-peroxyde, l'iso-butyryl-peroxyde, le bis-3,5,5-triméthyl-hexanoyl-peroxyde, et le méthyl-éthyl-cétone-peroxyde. La proportion d'amorceur est avantageusement comprise entre 0 et 0,5 % en poids de la quantité de precurseur.

La proportion de nodules rigides en poids peut être de 1 à 60 parties pour 99 à 40 parties de thermoplastique (M).

A titre d'exemple de (S) on peut citer les polyoléfines, les polyoléfines fonctionnalisées, les polyesters aliphatiques greffés, les polymères à blocs polyéther et blocs polyamide éventuellement greffés, les copolymères de l'éthylène et d'un (méth)acrylate d'alkyle et/ou d'un ester vinylique d'acide carboxylique saturé. Des exemples de polyoléfines ont deja été cités dans la description de (M).

(S) peut être aussi un copolymère à blocs ayant au moins un bloc compatible avec (M).

La polyoléfine fonctionnalisée est un polymère comprenant des motifs alpha oléfine et des motifs époxyde ou acide carboxylique ou anhydride d'acide carboxylique.

A titre d'exemple de (S) on peut citer les polyoléfines citées dans les polymères (M) ou encore les polymères blocs SBS, SIS, SEBS, les EPR (éthylène-polypropylène rubber aussi désigné EPM) ou EPDM ou ces polymères precédents greffés par des époxydes insaturés tels que le (méth)acrylate de glycidyle, ou par des acides carboxyliques tels que l'acide (méth)acrylique ou encore par des anhydrides d'acides carboxyliques insaturés tels que l'anhydride maléique.

On peut encore citer :
- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisés par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères monoaminés du caprolactame.

Avantageusement, c'est un copolymère éthylène / (méth)acrylate d'alkyle / anhydride maléique comprenant jusqu'à 40% en poids de (méth)acrylate d'alkyle et jusqu'à 10% en poids d'anhydride maléique. Le (méth)acrylate d'alkyle peut être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791.

Les polymères à blocs polyamide et blocs polyéthers ont été décrits plus haut dans les polymères (M). Ces produits peuvent être greffés par du chlorure de vinyle ou des acrylates d'alkyle. Ces produits sont décrits dans le brevet EP 365 398.

A titre d'exemple de (S) on peut encore citer les élastoméres tels que le polybutadiène, le SBR(styrène-butadiène rubber), le NBR(nitrile-butadiène rubber), le polyisoprène, ces elastomères fonctionnalisés ou encore le caoutchouc épichlorhydrine.

On ne sortirait pas du cadre de l'invention en utilisant plusieurs modifiants choc et/ou en utilisant par exemple un mélange d'un modifiant choc fonctionnalisé et d'un autre non fonctionnalisé.

La proportion de modifiant choc peut être de 0 à 60 parties (en poids) pour 100 à 40 parties de (M).

Des compositions avantageuses comprennent (en poids, le total étant 100):
40 à 99 parties de (M),
1 à 60 parties de nodules rigides,
0 à 60 parties de modifiant choc.

Les compositions selon l'invention peuvent renfermer en outre au moins un additif choisi parmi :
- les colorants ;
- les pigments ;
- les azurants ;
- les anti-oxydants ;
- les stabilisateurs UV.

La présente invention concerne aussi un procédé de préparation de ces compositions. Il consiste dans une première étape à former une solution homogène de précurseur des nodules dans le thermoplastique (M) à l'état fondu, dans une deuxième étape à introduire l'amorceur tout en restant à une température en dessous de laquelle l'amorceur devient actif, dans une troisième étape à chauffer à une température suffisante pour provoquer la réticulation du précurseur et former les nodules rigides tout en malaxant la composition, le modifiant choc étant introduit au cours de la première ou de la deuxième étape.

La première étape du procédé consiste à choisir le couple matrice thermoplastique (ou mélange de thermoplastique) /précurseur à l'aide des diagrammes de phases préalablement établis en fonction de la température. Cette première étape permet de définir le domaine de température dans lequel le mélange initial sera homogène. Il y a alors un effet de plastification de la matrice thermoplastique.

Après avoir introduit les proportions relatives matrice thermoplastique/précurseur, la deuxième étape consiste à introduire l'amorceur de polymérisation radicalaire dans le mélange réactionnel homogène. Quand tout l'amorceur est introduit, le système ternaire est porté à la température souhaitée (température de réaction liée à la nature de l'amorceur) pour donner lieu à la réaction de réticulation du précurseur.

La troisième et dernière étape se réalise lors de la réaction de réticulation, ou il y a suivant le taux d'avancement de la réticulation, une séparation de phase aboutissant à la formation de nodules rigides au sein d'une matrice thermoplastique.

Ce même mode opératoire est également applicable pour des systèmes tels que des mélanges thermoplastiques /modifiant choc /précurseur /amorceur. Avantageusement lors d'une première étape, le mélange binaire homogène élastomère/précurseur est réalisé puis ce mélange est ensuite incorporé dans la matrice thermoplastique en présence de l'amorceur pour aboutir à la dernière étape de réticulation puis séparation de phase.

La température de la première étape dépend de la température de fusion ou de transition vitreuse du thermoplastique (M) en présence du précurseur. La pression est sans influence, on peut opérer dans des malaxeurs ouverts ou dans des extrudeuses à une ou deux vis ou tout dispositif utilisé dans le compoundage des thermoplastiques.

Les températures des deuxièmes et troisièmes étapes sont déterminées par la température de réticulation du précurseur, cette étape de réticulation pouvant être réalisée en présence ou en absence d'amorceur (simplement par amorçage thermique du précurseur). En présence d'amorceurs la température de réticulation est la température à laquelle les amorceurs génèrent des radicaux libres.

La durée de la troisième étape peut être de 1 seconde à 4 heures. Elle peut se réaliser en 1 à 5 ou 10 minutes, et c'est l'un des principaux avantages de l'invention. En réalité cette durée se détermine facilement par l'homme du métier de la transformation des thermoplastiques, on connaît le débit d'une machine telle qu'une extrudeuse, les conditions de chauffe, la température à laquelle l'amorceur éventuel donne des radicaux ou la température à laquelle le précurseur réticule thermiquement.

### V - EXEMPLES

### Exemple 1: Synthèses de mélanges binaires PMMA/nodules rigides à base de monomères acrylates trifonctionnels à différents taux de phase rigide.

### Echantillon 1-1 : 100% PMMA transformé dans les mêmes conditions pour référence

Dans le réacteur d'un malaxeur Brabender, 55 g de PMMA (Altuglas® GR5) sont introduits. La température est portée à 160 °C pendant 10 min. Ensuite, le PMMA sorti réacteur est mis sous forme de barreaux 80*10*4 pour faire les mesures de température VICAT 50N.

### Echantillon 1-2 : 90% PMMA, 9.95 % TMPTMA, 0.05% peroxyde de dicumyle (% massique)

Dans le réacteur d'un malaxeur Brabender, 49.5 g de PMMA (Altuglas® GR5) sont introduits. La température est portée à 160 °C pendant 10 min. Ensuite, les 9.95 % de TMPTMA sont additionnés par petite quantité. Au fur et à mesure de l'addition du TMPTMA la température de la chambre du malaxeur est descendue progressivement à 100 °C. Au dernier ajout de TMPTMA, les 0.05 % de peroxyde de dicumyle sont également ajoutés. Ensuite, la température est portée à 160 °C pour effectuer la réticulation du TMPTMA pendant 10 minutes. Le mélange est sorti du réacteur et est mis sous forme de barreaux 80*10*4 pour faire les mesures de température VICAT 50N.

### Echantillon 1-3 : 80% PMMA, 19.8% TMPTMA, 0.2% peroxyde de dicumyle (% massique).

Dans le réacteur d'un malaxeur Brabender, 43.56 g de PMMA (Altuglas® GR5) sont introduits. La température est portée à 160 °C pendant 10 min. Ensuite, les 19.8 % de TMPTMA sont additionnés par petite quantité. Au fur et à mesure de l'addition du TMPTMA la température de la chambre du malaxeur est descendue progressivement à une température de 100 °C. Au dernier ajout de TMPTMA, les 0.2% de peroxyde de dicumyle sont ajoutés. Ensuite, la température est portée à 160 °C pour effectuer la réticulation du TMPTMA pendant 10 minutes. Le mélange est sorti du réacteur et est mis sous forme de barreaux 80*10*4 pour faire les mesures de température VICAT 50N.

### Echantillon 1-4 : 70% PMMA, 29.55% TMPTMA, 0.45% peroxyde de dicumyle (% massique).

Dans le réacteur d'un malaxeur Brabender, 37.9 g de PMMA (Altuglas® GR5) sont introduits. La température est portée à 160 °C pendant 10 min. Ensuite, les 29.55 % de TMPTMA sont additionnés par petite quantité. Au fur et à mesure de l'addition du TMPTMA la température de la chambre du malaxeur est descendue progressivement à une température de 100 °C. Au dernier ajout de TMPTMA, les 0.45 % de peroxyde de dicumyle sont ajoutés. Ensuite, la température est portée à 160 °C pour effectuer la réticulation du TMPTMA pendant 10 minutes. Le mélange est sorti du réacteur et est mis sous forme de barreaux 80*10*4 pour faire les mesures de température VICAT 50N.

Le tableau ci-dessous donnent les résultats des températures VICAT des échantillons 1-1à 1-4.

| **ECHANTILLONS** | **VICAT 50N (ISO 306850)** |
|---|---|
| **1-1** | 86.1 (+/- 0.5) |
| **1-2** | 89.2 (+/- 0.4) |
| **1-3** | 93.3 (+/-0.8) |
| **1-4** | 97.5 (+/-1.1) |

### Exemple 2: Synthèses de mélanges binaires PVDF/nodules rigides à base de monomères acrylates trifonctionnels à différents taux de phase rigide.

### Echantillon 2-1 : 100% PVDF transformé dans les mêmes conditions pour référence.

Dans le réacteur d'un malaxeur Brabender, 55 g de PVDF ( KYNAR® 1000 LD de ELF ATOCHEM) sont introduits. La température est portée à 210-220 °C pendant 10 min. Ensuite, le PVDF sortie réacteur est mis sous forme de barreaux 80*10*4 pour faire les mesures de température VICAT 50N.

### Echantillon 2-2 : 87.5% PVDF, 12.44 % TMPTA, 0.06% 2,5 diméthyl-2,5- bis (tertbutylperoxy)hexane (DHBP) (% massique)

Dans le réacteur d'un malaxeur Brabender, 49.5 g de PVDF (Kynar® 1000 LD) sont introduits. La température est portée à 210 °C pendant 10 min. Ensuite, les 12.44 % de TMPTA sont additionnés par petite quantité. Au fur et à mesure de l'addition du TMPTA la température de la chambre du malaxeur est descendue progressivement à une température de 130-140°C. Au dernier ajout de TMPTA, les 0.06 % de DHBP sont ajoutés. Ensuite, la température est portée à 180 °C pour effectuer la réticulation du TMPTA pendant 10 minutes. Le mélange est sorti du réacteur et est mis sous forme de barreaux 80*10*4 pour faire les mesures de température VICAT 50N.

### Echantillon 2-3 : 75% PVDF, 24.75 % TMPTA, 0.25% 2,5 diméthyl-2,5- bis (tertbutylperoxy)hexane (DHBP) (% massique)

Dans le réacteur d'un malaxeur Brabender, 42 g de PVDF (Kynar® 1000 LD) sont introduits. La température est portée à 210 °C pendant 10 min. Ensuite, les 24.75 % de TMPTA sont additionnés par petite quantité. Au fur et à mesure de l'addition du TMPTA la température de la chambre du malaxeur est descendue progressivement à une température de 130-140°C. Au dernier ajout de TMPTA, les 0.25 % de DHBP sont ajoutés. Ensuite, la température est portée à 180 °C pour effectuer la réticulation du TMPTA pendant 10 minutes. Le mélange est sorti du réacteur et est mis sous forme de barreaux 80*10*4 pour faire les mesures de température VICAT 50N.

Le tableau suivant donnent les résultats des températures VICAT des échantillons 2-1 à 2-3

| **ECHANTILLONS** | **VICAT 50N (ISO 306B50)** |
|---|---|
| **2-1** | 129(+/-1.4) |
| **2-2** | 142(+/- 0.4) |
| **2-3** | 160 (+/-0.2) |

### Exemple 3: Synthèses de mélanges PA 12/modifiant choc/nodules rigides à base de monomères acrylates trifonctionnels à différents taux de phase rigide.

Le modifiant choc est le LOTADER 4700® copolymère éthylène-acrylate de butyle-anhydride maléique de MFI (melt flow index ou indice d'écoulement à l'état fondu en g par 10 min) 7 (à 190°C -2,16 Kg) et comprenant 30% d'acrylate et 1.5% d'anhydride.

PA 12 désigne un polyamide 12 de viscosité inhérente 1.65

### Echantillon 3-1 : 100% PA12 (AESNO® TL) transformé dans les mêmes conditions pour référence.

Dans le réacteur d'un malaxeur Brabender, 55 g de PA 12 (AESNO® TL) sont introduits. La température est portée à 190°C pendant 10 min. Ensuite, le PA12 sorti réacteur est mis sous forme de barreaux 80*10*4 pour faire les caractérisations mécaniques (choc, module, VICAT 50N).

### Echantillon 3-2 : préparation du mélange binaire Lotader®/TMPTA (60/40 : % massique) sans réaliser la réticulation du TMPTA

Dans le réacteur d'un malaxeur Brabendeur, 40g de Lotader® 4700 sont introduits. La température est portée à 110 °C pendant 10 min. Ensuite, les 40% de TMPTA sont additionnés par petite quantité. Jusqu'à l'addition complète du TMPTA la température de la chambre du malaxeur est maintenu à 110°C.

### Echantillon 3-3 : 85% PA 12, 14.925 % de l'échantillon 3-2, 0.075 % 2,5 diméthyl-2,5- bis (tertbutylperoxy)hexane (DHBP) (% massique)

Dans le réacteur d'un malaxeur Brabendeur, 47 g de PA 12 (AESNO® TL) sont introduits. La température est portée à 190 °C pendant 10 min. Ensuite, les 14.925 % de **l'échantillon 3-2** sont additionnés. Après ajout total de l'échantillon 3-2, les 0.075 % de du DHBP sont ajoutés et la température de la chambre du malaxeur est rapidement augmenté à une température de 220°C et est gardé constante pendant 10 minutes. Le mélange est sorti du réacteur et est mis sous forme de barreaux 80*10*4 pour faire les caractérisations mécaniques (choc, module, VICAT 50N).

### Echantillon 3-4 : 85% PA 12, 15 % de LOTADER® 4700 (% massique): sert de référence.

Dans le réacteur d'un malaxeur Brabender, 47 g de PA 12 (AESNO® TL) sont introduits. La température est portée à 190 °C pendant 10 min. Ensuite, les 15% de LOTADER® 4700 sont additionnés. Après ajout total du LOTADER® la température de la chambre du malaxeur est rapidement augmentée à une température de 220°C et est gardé constante pendant 10 minutes. Le mélange est sorti du réacteur et est mis sous forme de barreaux 80*10*4 pour faire les caractérisations mécaniques (choc, module, VICAT 50N).

Le tableau suivant résume les principales propriétés mécaniques de ces alliages.

| **Echantillons** | **Choc charpy entaillé en kJ/m**^{**2**} | **module Flexion en MPa** | **VICAT en °C** |
|---|---|---|---|
| **3-1** | 10.2 | 1100 | 140 |
| **3-3** | 60 | 1450 | 144 |
| **3-4** | 45 | 777 | 100 |

### Exemple 4: Synthèses de mélanges PA 12/modifiantchoc/nodules rigides à base de monomères acrylates trifonctionnels à différents taux de phase rigide. Le modifiant choc est un copolymère à blocs polyamide 12 et blocs polytetramethylène glycol (1000/1000) de dureté shore D 40.désigné par PEBAX® MX 1205

### Echantillon 4-1 : 100% PA 12 (AESNO® TL) transformé dans les mêmes conditions pour référence.

Dans le réacteur d'un malaxeur Brabender, 55 g de PA 12 (AESNO® TL) sont introduits. La température est portée à 190°C pendant 10 min. Ensuite, le PA 12 sortie réacteur est mis sous forme de barreaux 80*10*4 pour faire les caractérisations mécaniques (choc, module, VICAT 50N).

### Echantillon 4-2 : préparation du mélange binaire PEBAX® MX 1205/TMPTA (60/40 : % massique) sans réaliser la réticulation du TMPTA.

Dans le réacteur d'un malaxeur Brabender, 40g de PEBAX® sont introduits. La température est portée à 165 °C pendant 10 min. Ensuite, les 40% de TMPTA sont additionnés par petite quantité. Jusqu'à l'addition complète du TMPTA la température de la chambre du malaxeur est maintenue à 165°C.

### Echantillon 4-3 : 85% PA 12, 14.925 % de l'échantillon 4-2, 0.075 % 2,5 diméthyl-2,5- bis (tertbutylperoxy)hexane (DHBP) (% massique)

Dans le réacteur d'un malaxeur Brabender, 47 g de PA 12 (AESNO® TL) sont introduits. La température est portée à 190 °C pendant 10 min. Ensuite, les 14.925 % de **l'échantillon 4-2** sont additionnés. Après ajout total de l'échantillon 3-2, les 0.075 % de DHBP sont ajoutés et la température de la chambre du malaxeur est rapidement augmentée à une température de 220°C et est gardée constante pendant 10 minutes. Le mélange est sorti du réacteur et est mis sous forme de barreaux 80*10*4 pour faire les caractérisations mécaniques (choc, module, VICAT 50N).

### Echantillon 4-4 : 85% PA 12, 15 % de PEBAX® (% massique) : sert de référence.

Dans le réacteur d'un malaxeur Brabender, 47 g de PA 12 (AESNO® TL) sont introduits. La température est portée à 190 °C pendant 10 min. Ensuite, les 15% de PEBAX® sont additionnés. Après ajout total du PEBAX® la température de la chambre du malaxeur est rapidement augmentée à une température de 220°C et est gardée constante pendant 10 minutes. Le mélange est sorti du réacteur et est mis sous forme de barreaux 80*10*4 pour faire les caractérisations mécaniques (choc, module, VICAT 50N).

Le tableau suivant résume les principales propriétés mécaniques de ces alliages.

| **Echantillons** | **Choc charpy entaillé en kJ/m**^{**2**} | **module Flexion en MPa** | **VICAT en °C** |
|---|---|---|---|
| **4-1** | 10.2 | 1100 | 140 |
| **4-3** | 75 | 1400 | 143 |
| **4-4** | 55 | 900 | 113 |

## Revendications

1. Composition thermoplastique comprenant :
• un polymère thermoplastique (M) formant matrice,
• des nodules rigides obtenus par polymérisation radicalaire de monomères di ou trünsaturés et tels que 50 % en nombre de ces nodules ont une taille inférieure à 1 µm et que leur forme est sphérique,
• éventuellement un modifiant choc (S).

2. Composition selon la revendication 1 dans laquelle le polymère thermoplastique (M) est choisi parmi les polyoléfines, les polyamides, les polymères fluorés, les polyesters saturés, le polycarbonate, les résines styréniques, le PMMA, les polyuréthanes thermoplastiques (TPU), les copolymères à blocs polyamides, les copolymères à blocs polyester et blocs polyéther, le PVC, les copolymères de l'éthylène et de l'alcool vinylique (EVOH) et les polycétones.

3. Composition selon l'une quelconque des revendications précédentes dans laquelle la proportion de nodules rigides en poids est de 1 à 60 parties pour 99 à 40 parties de thermoplastique (M).

4. Composition selon l'une quelconque des revendications précédentes dans laquelle le précurseur des nodules rigides est choisi parmi le triméthylolpropane triacrylate (TMPTA) et le triméthylolpropane triméthacrylate(TMPTMA).

5. Composition selon l'une quelconque des revendications précedentes dans laquelle la proportion de modifiant choc est de 0 à 60 parties (en poids) pour 100 à 40 parties de (M).

6. Composition selon l'une quelconque des revendications précédentes dans laquelle les proportions sont les suivantes (le total étant 100)
40 à 99 parties de (M),
1 à 60 parties de nodules rigides,
0 à 60 parties de modifiant choc.

7. Procédé de préparation des compositions selon l'une quelconque des revendications précédentes consistant dans une première étape à former une solution homogène de précurseur des nodules dans le thermoplastique (M) à l'état fondu, dans une deuxième étape à introduire l'amorceur tout en restant à une température en dessous de laquelle l'amorceur devient actif, dans une troisième étape à chauffer à une température suffisante pour provoquer la réticulation du précurseur et former les nodules rigides tout en malaxant la composition, le modifiant choc étant introduit au cours de la première ou de la deuxième étape.

8. Procédé selon la revendication 7 dans laquelle l'amorceur est un peroxyde en proportion de 0 à 0,5% en poids de la quantité de précurseur.

## Patentansprüche

1. Thermoplastische Zusammensetzung, enthaltend:
• ein matrixbildendes thermoplastisches Polymer (M),
• durch radikalische Polymerisation von zwei- oder dreifach ungesättigten Monomeren erhaltene steife Körnchen, die zu mindestens 50%, bezogen auf die Körnchenzahl, kleiner als 1 µm sind und Kugelform aufweisen, und
• gegebenenfalls einen Schlagzähigkeitsmodifikator (S).

2. Zusammensetzung nach Anspruch 1, in der das thermoplastische Polymer (M) unter Polyolefinen, Polyamiden, Fluorpolymeren, gesättigten Polyestern, Polycarbonat, Styrolharzen, PMMA, thermoplastischen Polyurethanen (TPU), Polyamid-Blockcopolymeren, Polyester-Polyether-Blockcopolymeren, PVC, Ethylen-Vinylalkohol-Copolymeren (EVOH) und Polyketonen ausgewählt ist.

3. Zusammensetzung nach einem der vorhergehenden Ansprüche, in der der Gewichtsanteil an steifen Körnchen 1 bis 60 Teile auf 99 bis 40 Teile Thermoplast (M) beträgt.

4. Zusammensetzung nach einem der vorhergehenden Ansprüche, in der der Vorläufer für die steifen Körnchen unter Trimethylolpropantriacrylat (TMPTA) und Trimethylolpropantrimethacrylat (TMPTMA) ausgewählt ist.

5. Zusammensetzung nach einem der vorhergehenden Ansprüche, in der der Anteil an Schlagzähigkeitsmodifikator 0 bis 60 Gewichtsteile auf 100 bis 40 Teile (M) beträgt.

6. Zusammensetzung nach einem der vorhergehenden Ansprüche mit den folgenden Anteilen (die sich insgesamt auf 100 belaufen):
40 bis 99 Teile (M),
1 bis 60 Teile steife Körnchen,
0 bis 60 Teile Schlagzähigkeitsmodifikator.

7. Verfahren zur Herstellung der Zusammensetzungen nach einem der vorhergehenden Ansprüche, bei dem man in einem ersten Schritt eine homogene Lösung von Vorläufer für die Körnchen in dem Thermoplast (M) in schmelzflüssigem Zustand herstellt, in einem zweiten Schritt Initiator zugibt, wobei man die Temperatur unter der Aktivierungstemperatur des Initiators hält, und in einem dritten Schritt unter Kneten der Zusammensetzung auf eine so hohe Temperatur erhitzt, daß der Vorläufer vernetzt wird und sich steife Körnchen bilden, wobei der Schlagzähigkeitsmodifikator im Lauf des ersten oder zweiten Schritts eingetragen wird.

8. Verfahrei nach Anspruch 7, bei dem man als Initiator ein Peroxid in einem Anteil von 0 bis 0,5 Gew.-%, bezogen auf die Menge an Vorläufer, verwendet.

## Claims

1. Thermoplastic composition comprising:
• a matrix-forming thermoplastic polymer (M),
• rigid nodules obtained by radical polymerization of di- or triunsaturated monomers and such that 50% by number of these nodules have a size of less than 1 µm and that their shape is spherical
• optionally an impact modifier (S).

2. Composition according to Claim 1, in which the thermoplastic polymer (M) is chosen from polyolefins, polyamides, fluorinated polymers, saturated polyesters, polycarbonate, styrene resins, PMMA, thermoplastic polyurethanes (TPU), copolymers comprising polyamide blocks, copolymers comprising polyester blocks and polyether blocks, PVC, copolymers of ethylene and of vinyl alcohol (EVOH), and polyketones.

3. Composition according to either one of the preceding claims, in which the proportion of rigid nodules by weight is from 1 to 60 parts per 99 to 40 parts of thermoplastic (M).

4. Composition according to any one of the preceding claims, in which the precursor of the rigid nodules is chosen from trimethylolpropane triacrylate (TMPTA) and trimethylolpropane trimethacrylate (TMPTMA).

5. Composition according to any one of the preceding claims, in which the proportion of impact modifier is from 0 to 60 parts (by weight) per 100 to 40 parts of (M).

6. Composition according to any one of the preceding claims, in which the proportions are as follows (the total being 100)
40 to 99 parts of (M),
1 to 60 parts of rigid nodules,
0 to 60 parts of impact modifier.

7. Process for the preparation of the compositions according to any one of the preceding claims, which consists, in a first stage, in forming a homogeneous solution of precursor of the nodules in the thermoplastic (M) in the molten state, in a second stage, in introducing the initiator while remaining at a temperature below which the initiator becomes active, and, in a third stage, in heating to a temperature sufficient to cause crosslinking of the precursor and to form rigid nodules while kneading the composition, the impact modifier being introduced during the first or the second stage.

8. Process according to Claim 7, in which the initiator is a peroxide in a proportion of 0 to 0.5% by weight of the amount of precursor.
